(19) Europäisches Patentamt

European Patent Office

Office européen des brevets

(11) **EP 4 625 934 A1**

(12) **EUROPEAN PATENT APPLICATION**

(43) Date of publication:
**01.10.2025 Bulletin 2025/40**

(21) Application number: **24179301.7**

(22) Date of filing: **31.05.2024**

(51) International Patent Classification (IPC):
$H04L\ 45/02^{(2022.01)}$      $H04L\ 41/14^{(2022.01)}$
$H04L\ 45/302^{(2022.01)}$     $H04L\ 45/64^{(2022.01)}$
$H04L\ 47/70^{(2022.01)}$

(52) Cooperative Patent Classification (CPC):
**H04L 45/64; H04L 41/12; H04L 41/145;**
**H04L 45/02; H04L 45/10; H04L 45/304;**
**H04L 47/829**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **28.03.2024 IN 202441025657**

(71) Applicants:
- **Hitachi Energy Ltd**
  **8050 Zürich (CH)**
- **Indian Institute of Technology Kharagpur**
  **Kharagpur, West Bengal 721302 (IN)**

(72) Inventors:
- **TANDUR, Deepaknath**
  **560068 Bangalore (IN)**
- **NAMPOOTHIRI, Narayanan**
  **560066 Bangalore (IN)**
- **SAHA, Ruelia**
  **700059 Kolkata (IN)**
- **MISRA, Sudip**
  **721302 Kharagpur (IN)**

(74) Representative: **Zacco Sweden AB**
**P.O. Box 5581**
**Löjtnantsgatan 21**
**114 85 Stockholm (SE)**

(54) **AN ADAPTIVE ARRANGEMENT OF NETWORK RESOURCES IN AN ELECTRICAL NETWORK**

(57) Embodiments of the present disclosure provide a method (300) and system (200) for adaptive arrangement of network resources in electrical network. The system (200) receives network criteria to identify network-related information. The network criteria are used to arrange network resources in electrical network. The system (200) generates first topology of electrical network according to the network criteria. The first topology has first arrangement of network resources in each node in the first topology. The system (200) identifies effect of network constraint parameters over the first arrangement of network resources in the first topology. The effect identifies performance of network resources in the first arrangement. The system (200) selects second arrangement of network resources in the first topology according to the effect of each constraint over network resources.

EP 4 625 934 A1

FIG. 4

**Description**

TECHNICAL FIELD

The present disclosure relates generally to a field of network topology. More particularly, it is related to a system for adaptive arrangement of network resources in an electrical network.

BACKGROUND

In telecommunication, core network provides connectivity and routing services between different parts of a network and controls the flow of traffic between the different parts of the network. For example, it connects different regions or countries and routes traffic to external networks, such as Internet and cloud services. These core network uses traditional Synchronous Digital Hierarchy (SDH) or packet-based technology for carrying data for communication.

At present, the network is manually designed over a map comprising a core ring with one or multiple sub-ring structures. The manual designing of the network requires a lot of manual effort in determining certain features in the network such as the appropriate clock location for the network design. Further, the manual effort is also required when an existing network needs to be augmented with additional elements such as addition of new network nodes. Generally, determining the clock location is often an after-thought which is performed after the designing of the network, and is thus, a tedious manual process that is implemented over large networks. Further, in order, to ensure the quality of distribution of clock information in the network, there is often a limit in number of hops that the clock information can be carried over in the network. Hence determining an appropriate location of a clock source which may contain a Global Positioning System (GPS) such that maximum number of network elements may be served with minimal number of clock source locations/- clock locations is vital for saving cost.

Once the designed network is in operation, addition of any new element into the exiting network, may lower the quality of the clock information which is being transmitted over additional hops in the network. Generally, during addition of the new element, a new clock source is added, or the existing clock location may not be optimal in the network due to the added element. Similarly, addition of a secondary clock source in the network for redundancy may not be an optimal location in the network. Further, manual extension of the network topology may overlook other network topology requirements such as limit in the maximum number of hops for information transmission over sub-rings etc. Also, the manual extension of the network topology may overlook any potential spanning tree loops. As a result, the manual process of designing and extending the network can be laborious, error prone and time consuming.

In general, a communication network supporting the electrical grid may consist of many network elements such as more than 500 network elements (also referred as network nodes) that are arranged in the core ring along with multiple sub-rings. Further manually designing the network based on network constraints/criteria is cumbersome and time-consuming. Consider the network is created manually and upon creating, the network may be expanded by the addition of subnetworks to backbone network. However, due to the introduction of the new subnetwork, distribution of timing information/clock information for synchronization of these network elements becomes crucial. The synchronization of the network elements is critical to ensure that the timing information continues to be distributed without any compromise in the quality of the communication and for maintaining proper routing of packets within the network for communication. Thus, ensuring quality distribution of the clock information in the network to carry the data for the communication is vital. Further, in order to maintain the clock synchronization, Global Positioning System (GPS) is installed on some of the network elements that propagate the clock information to subsequent network nodes. However, the propagation of the clock information is restricted to a specific number of hops for a minimal required quality of clock reception, beyond which, the clock information may not be transferred within the network. Hence, allowable hops within the network for proper transfer of the clock information are necessary.

SUMMARY

Consequently, there is a need for an improved method and system for adaptive arrangement of network resources in an electrical network.

It is therefore an object of the present disclosure to provide a method and a system for the adaptive arrangement of the network resources in the electrical network to mitigate, alleviate, or eliminate all or at least some of the above-discussed drawbacks of presently known solutions.

According to a first aspect of the present disclosure, a method for adaptive arrangement of communication network resources in the electrical network is provided. The electrical network comprises a plurality of network nodes being arranged at fixed locations and interconnectable to one another by a communication network.

The method comprises receiving one or more network criteria to identify network-related information. The one or more network criteria are used to arrange one or more network resource from a plurality of network resources in the electrical network. The method comprises generating a first topology of the electrical network according to the received one or more network criteria. The first topology has a first arrangement of the one or more network resources in each node in the first topology. Further, the method comprises identifying an effect of one or more network constraint parameters associated with each network node over the first arrangement of the one or more network resources in the first topology. The effect identifies a performance of the one or more network resources in the first arrangement in the first topology. Thereafter, the method comprises selecting a second arrangement of the one or more network resources in the first topology according to the effect of the each constraint over the one or more network resources.

Therefore, with the proposed method, the designing of the core ring and sub-ring structures of the network is possible based on simple high-level network criteria and coordinates over a 2-D plane or map. The proposed method considers the network constraints parameters, such as network topology characteristics and cost involved during the adaptive arrangement of the network resources in the electrical network. The network constraint parameters allow operational engineers to quickly determine the best/appropriate location of primary and secondary clock sources (i.e., network resources) for any potential change or addition of network nodes in the network design.

In some embodiments, the one or more network criteria comprises at least one of: a maximum number of allowable hops for each network node; a maximum number of hops intended for use in transferring a the clock information between the plurality of network nodes by maintaining clock synchronization; a total number of network nodes present in a the subnetwork; a position of each network node in the electrical network; a topology for arranging the plurality of network nodes in the electrical network; a positioning of one or more clock sources in the electrical network; a flow of the clock information within the electrical network; and spanning tree loops to be removed between the at least two network nodes.

Therefore, the proposed method is able to utilise the one or more network criteria to determine the first or the second topology of the electrical network by using features/network criteria such as limited network hops or minimal spanning tree loops to obtain an optimal topology of the electrical network for the communication.

In some embodiments, the maximum number of allowable hops for each network node is a user-defined network criterion of the one or more network criteria.

In some embodiments, the total number of network nodes present in the subnetwork is based on a spread of the plurality of network nodes over a geographical region.

In some embodiment, the one or more network resources comprises at least one of a clock source, a GPS module, and hops in the electrical network.

In some embodiment, the one or more network constraint parameters comprises signal strength of a network source located in the electrical network, throughput of each of the plurality of network nodes, traffic load, latency, and packet losses, addition or deletion of sub-networks in the first topology.

In some embodiment, the first arrangement comprises a position of the one or more networks resource in each node, and connectivity of each network resource with other network resources in the plurality of network resources.

In some embodiments, the effect is identified by comparing performance of the one or more network resources with one or more performance threshold values for each network constraint parameter.

In some embodiments, the method comprises generating one of: an updated first topology or a second topology according to the second arrangement of the one or more network resources in the first topology of the electrical network.

The proposed method is flexible in adding a subnetwork after the creation of the backbone network/first topology. The proposed method allows expansion of the first topology by either adding or deleting subnetworks to the first topology with time.

In some embodiments, the second arrangement comprises at least one of: a change in the maximum number of allowable hops for each network node; a change in the maximum number of hops intended for use in transferring the clock information between the plurality of network nodes by maintaining clock synchronization; a change in the total number of network nodes present in the subnetwork; a change in the position of each network node in the electrical network; a change in the positioning of the one or more clock sources in the electrical network; a change in the flow of the clock information within the electrical network; a change in the spanning tree loops to be removed between the at least two network nodes; and a change in connectivity of the at least one network resource with other network resource.

The proposed method provides the network design based on the one or more network criteria/high-level intent provided by the user. The high-level intent constitutes the maximum allowable hops in the network, maximum allowable hops for transferring clock information, and the like. Therefore, depending on requirement of user the proposed method provides different network designs which is displayed to the user. Further, the user may select one of the network designs per the requirement.

In some embodiments, the first and second arrangement of the one or more network resources represent an arrangement of one or more communication links of the communication network for each of the plurality of network nodes to interconnect with another network node.

In some embodiment, the method comprises selecting one of the first arrangement or the second arrangement of the one or more network resources. The method comprises selecting a network configuration package for the selected the first arrangement or the second arrangement in the first topology. The network configuration package comprises an interface plug-in having an extension, said extension comprising a simulation model, wherein via the extension, the simulation model is accessed to simulate results of the first topology for the selected first arrangement or the second arrangement to determine cost criteria associated with the first topology.

In some embodiment, the each of the first arrangement and the second arrangement is intended for use in: receiving a clock signal from each of the one or more clock sources associated with each network node in the electrical network. Monitoring quality of the received clock signal associated with each network node by comparing the received clock signal with a reference signal to obtain a deviation value. Determining a selection of a network node for a new clock source along with a direction of a percolation of the clock information, if the deviation value is above a predefined value. Thereafter, addition of a subnetwork with a backbone network to the electrical network at different instances of time period.

The proposed method allows transferring of the clock information to the subnetwork from the GPS connected to one of the network elements present in the backbone network. Thus, the proposed method maintains clock synchronization within the subnetwork without disturbing the clock synchronization in the backbone network.

According to a second aspect of the present disclosure, a system for adaptive arrangement of network resources in an electrical network is provided. The electrical network comprises a plurality of network nodes being arranged at fixed locations and interconnectable to one another by a communication network. The system comprises a processing circuitry arranged to receive one or more network criteria to identify network-related information. The one or more network criteria are used to arrange one or more network resource from a plurality of network resources in the electrical network. The processing circuitry is arranged to generate a first topology of the electrical network according to the received one or more network criteria. The first topology has a first arrangement of the one or more network resources in each node in the first topology. The processing circuitry is arranged to identify an effect of one or more network constraint parameters associated with each network node over the first arrangement of the one or more network resources in the first topology. The effect identifies a performance of the one or more network resources in the first arrangement in the first topology. Thereafter, the processing circuitry is arranged to select a second arrangement of the one or more network resources in the first topology according to the effect of the each constraint over the one or more network resources.

According to a third aspect of the present disclosure, there is provided a computer program product comprising a non-transitory computer readable medium, having thereon a computer program comprising program instructions. The computer program is loadable into a data processing unit and configured to cause execution of the method according to the first and second aspects when the computer program is run by the data processing unit.

Advantageously, the proposed method and system provides adaptive arrangement of network resources in the electrical network without any manual intervention. Thus, reducing time-consumption in generation of the network design and also reduces errors caused due to the manual designing of the network.

In some embodiments, any of the above aspects may additionally have features identical with or corresponding to any of the various features as explained above for any of the other aspects.

Other advantages may be readily apparent to one having skill in the art. Certain embodiments may have none, some, or all of the recited advantages.

BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.

FIG. 1 discloses an example of a wireless communication system according to some embodiments;

FIG. 2 discloses a schematic block diagram illustrating an example system arranged in a wireless communication system according to some embodiments;

FIG. 3 is a flowchart illustrating example steps for a method for adaptive arrangement of network resource in the electrical network according to some embodiments;

FIGs. 3a-3c shows an example for removing spanning tree loop for adaptive arrangement of network resource in the electrical network according to some embodiments;

FIG. 3d shows an example for number of network nodes for adaptive arrangement of network resource in the electrical network according to some embodiments;

FIG. 3e shows an example of position of network nodes for adaptive arrangement of network resource in the electrical network according to some embodiments;

FIG. 4 discloses schematic block diagram illustrating workflow of automatic arrangement of network resources for a network design according to some embodiments;

FIG. 5 shows a block diagram illustrating extraction from network criteria for automatic arrangement of network resources for the network design according to some embodiments;

FIGs. 6 and 7 show plurality of network nodes arranged at fixed location by a communication network according to some embodiments;

FIGs. 8a-8b and 9 show steps of generating topology of electrical network with respect to maximum allowable hops according to some embodiments;

FIGs. 10a-10c show a flow of clock information in the generated topology according to some embodiments;

FIG. 11 shows cost involved in arranging network resources according to some embodiments;

FIGs. 12a-12d show adaptive arrangement of network resources in the electrical network according to some embodiments;

FIG. 13 shows a core network connected to a ring network with network resources according to some embodiments;

FIGs. 14a-14d show architecture of system for adaptive arrangement of network resource in the electrical network according to some embodiments; and

FIG. 15 discloses an example computing environment according to some embodiments.

DETAILED DESCRIPTION

Aspects of the present disclosure will be described more fully hereinafter with reference to the accompanying drawings. The method and system disclosed herein can, however, be realized in many different forms and should not be construed as being limited to the aspects set forth herein. Like numbers in the drawings refer to like elements throughout.
The terminology used herein is for the purpose of describing particular aspects of the disclosure only and is not intended to limit the invention. It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.
Embodiments of the present disclosure will be described and exemplified more fully hereinafter with reference to the accompanying drawings. The solutions disclosed herein can, however, be realized in many different forms and should not be construed as being limited to the examples set forth herein.
In the following description of exemplary embodiments, the same reference numerals denote the same or similar components.

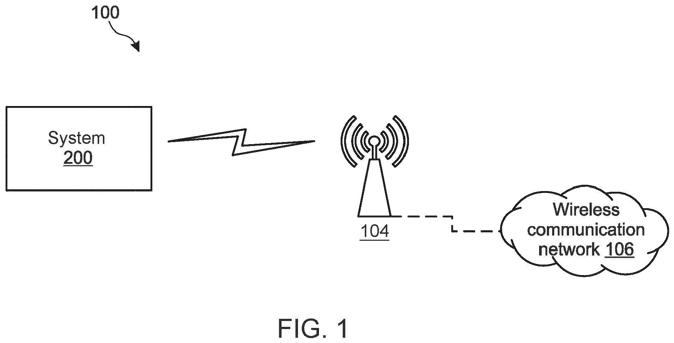

FIG. 1 discloses an example wireless communication system (100). Although the subject matter described herein may be implemented in any appropriate type of system using any suitable components, the examples disclosed herein are described in related to a wireless communication system/wireless network, such as the example wireless communication system (100) described in FIG. 1.
The wireless communication system (100) may comprise and/or interface with any type of communication, telecommunication, data, cellular, and/or radio network or other similar type of system. The wireless communication system (100) may be configured to operate according to specific standards or other types of predefined rules of procedures. Thus, the wireless communication system (100) may implement communication standards, such as, but not limited to, global system for mobile communications (GSM), universal mobile telecommunications system (UMTS), long term evolution (LTE), and/or other suitable 2G, 3G, 4G, or 5G standards, wireless local area network (WLAN), standards such as, IEEE 802.11 standards, and/or any other appropriate wireless communication standards, such as, worldwide interoperability for microwave access, WiMax, Bluetooth, Z-Wave and/or ZigBee standards.
For simplicity, as depicted in FIG. 1, the wireless communication system (100) comprises a system (200), a network node (104), and a network (106). The system (200) and the network node (104) operate together in order to provide wireless connections in the wireless communication system (100). The network (106) may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices (for example, wireless devices and a network node).

The network node (104) may refer to equipment capable, configured, arranged, and/or operable to and/or with other network nodes or equipment in the wireless communication system (100) to enable and/or provide wireless access and/or to perform other functions (for example, administration) in the wireless communication system (100). Examples of the network node (104) include, but are not limited to, access points, Aps (for example, radio access points), base stations, BSs (for example, radio base stations, nodeBs, evolved NodeBs, eNBs, new radio, NR, nodes (gNBs), or the like). The BSs may be categorized based on an amount of coverage the BSs provide (or, stated different, their transmit power level) and may then also be referred to as femto BSs, pico BSs, micro-BSs, macro-BSs. The BS may be a relay node or a relay donor node controlling a relay.

The system (200) may refer to a device capable, configured, arranged and/or operable to communicate wirelessly with the network node (104) and/or other wireless devices.

In some examples, the wireless devices may include one or more of: computing devices, wireless devices, ultra-low power wireless devices, Internet of Things, IoT, devices, and so on.

Examples of the computing devices may include, but are not limited to, a smart phone, a mobile phone, a cell phone, a voice over Internet Protocol, IP, VoIP, phone, a wireless local loop phone, a desktop computer, a personal digital assistant (PDA), a wireless camera, a gaming console or device, a wearable terminal device, a wireless endpoint, a mobile station, a tablet, a laptop, a laptop-embedded equipment (LEE), a laptop-mounted equipment (LME), a smart device, a wireless customer-premise equipment (CPE), a vehicle- mounted wireless terminal device, and so on.

It should be understood that the system (200) may not be limited to the above-described wireless devices. The system (200) may be extended to other wireless devices of different classes or categories providing different services while supporting, for example, Enhanced Mobile Broadband, eMBB, massive Machine-Type Communication, MTC, Ultra-Reliable Low Latency Communication, URLLC, Time Sensitive Networking, TSN, or the like.

In the wireless communication system (100), the network node (104) and the system (200) are connected to 3GPP 5G core network, where specific network services and operations are provided through software components called network functions, NFs. The wireless communication system (100) hosts large scale applications.

Once the designed network is in operation, addition of any new element into the exiting network, may lower the quality of the clock information which is being transmitted over additional hops in the network. Generally, during addition of the new element, a new clock source is added, or the existing clock location may not be optimal in the network due to the added element. Similarly, addition of a secondary clock source in the network for redundancy may not be an optimal location in the network. Further, manual extension of the network topology may overlook other network topology requirements such as limit in the maximum number of hops for information transmission over sub-rings etc. Further, the manual extension of the network topology may overlook any potential spanning tree loops. As a result, the manual process of designing and extending the network can be laborious, error prone and time consuming.

Thus, the present disclosure presents a wireless communication network (100), a network node (104) and a system (200), wherein the system (200) is adapted for adaptive arrangement of network resource in the electrical network and eliminating the manual processes of arranging network resources in the electrical network.

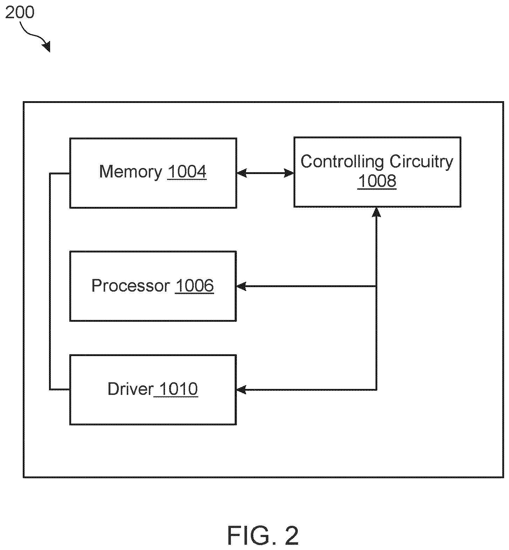

FIG. 2 discloses a schematic block diagram illustrating an example system (200) arranged in a wireless communication system (100) according to some embodiments.

In FIG. 2, the example system (200) may be implemented in a computing device. The system (200) is illustrated comprising one or more modules. The one or more modules may comprise a memory (1004), a processor (1006), a controlling circuitry (1008), and a driver (1010). The controlling circuitry (1008) may be adapted to control the other modules. In an example, the controlling circuitry (1008) may be alternatively referred to as processing circuitry (1008).

The memory (1004), the processor (1006) and the driver (1010) as well as the processing circuitry (1008), may be operatively connected to each other.

The memory (1004) may be adapted to store the one or more network criteria and one or more network constraint parameters relating to a communication attempt from the system (200).

The processing circuitry (1008) may be adapted to control the steps as executed by the system (200). For example, the processing circuitry (1008) may be adapted to receive the one or more network criteria to identify network-related information. The one or more network criteria are used to arrange one or more network resources from the plurality of network resources in the electrical network. The processing circuitry (1008) may be adapted to generate the first topology of the electrical network according to the received one or more network criteria. The first topology has the first arrangement of the one or more network resources in each node in the first topology. The processing circuitry (1008) may be adapted to identify an effect of the one or more network constraint parameters associated with each network node over the first arrangement of the one or more network resources in the first topology. The effect identifies the performance of the one or more network resources in the first arrangement in the first topology. Thereafter, the processing circuitry (1008) may be adapted to select the second arrangement of the one or more network resources in the first topology according to the effect of the each constraint over the one or more network resources.

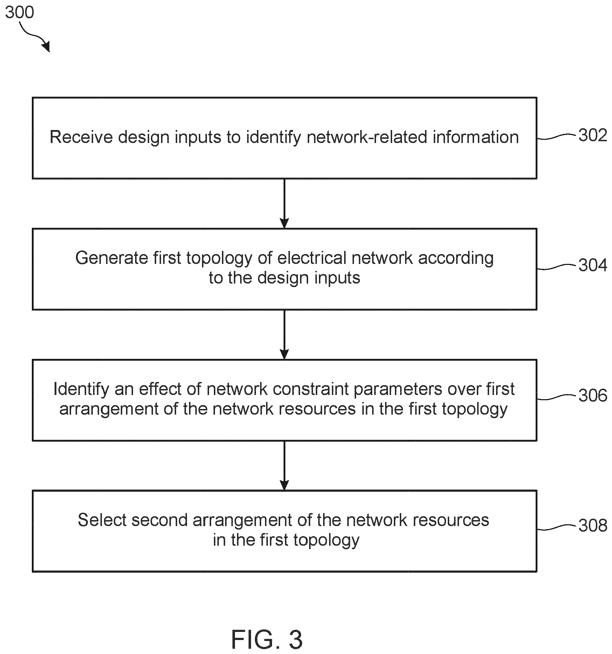

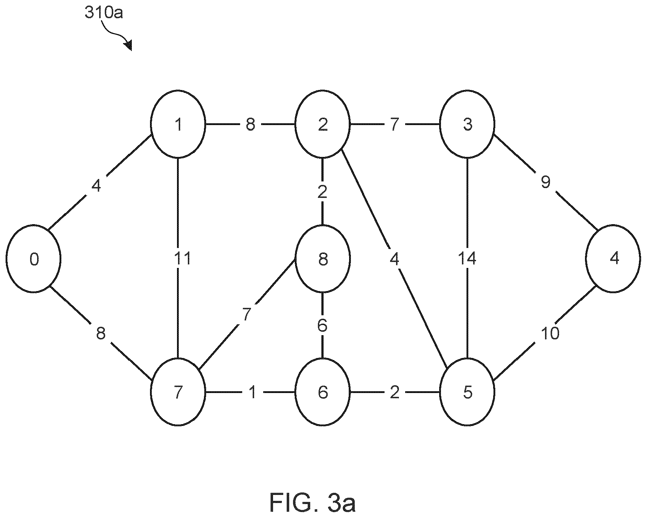

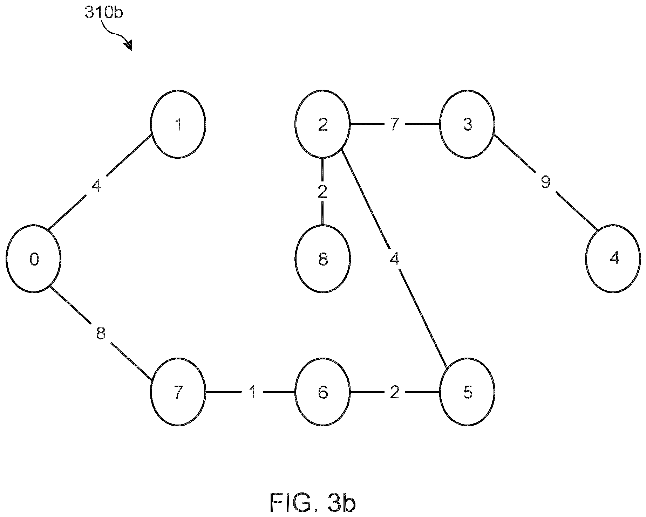

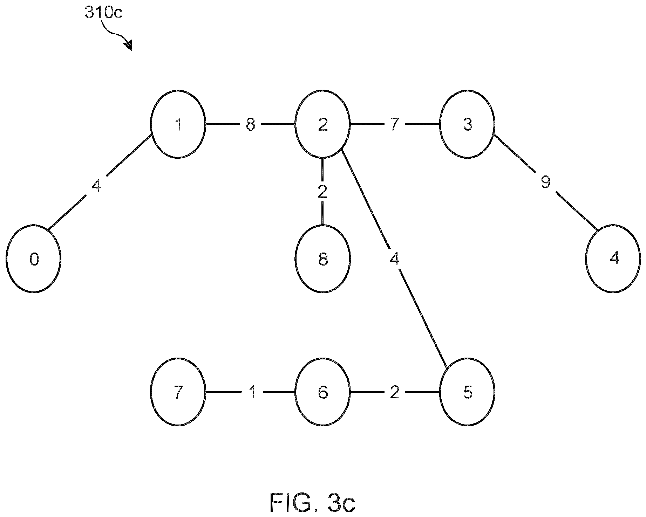

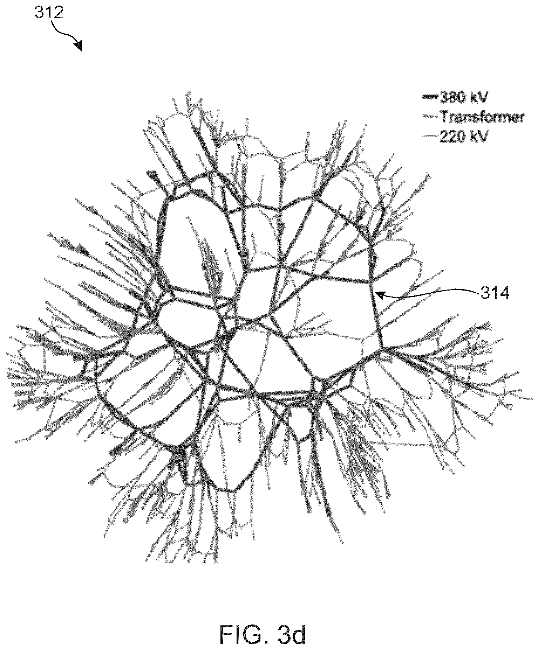

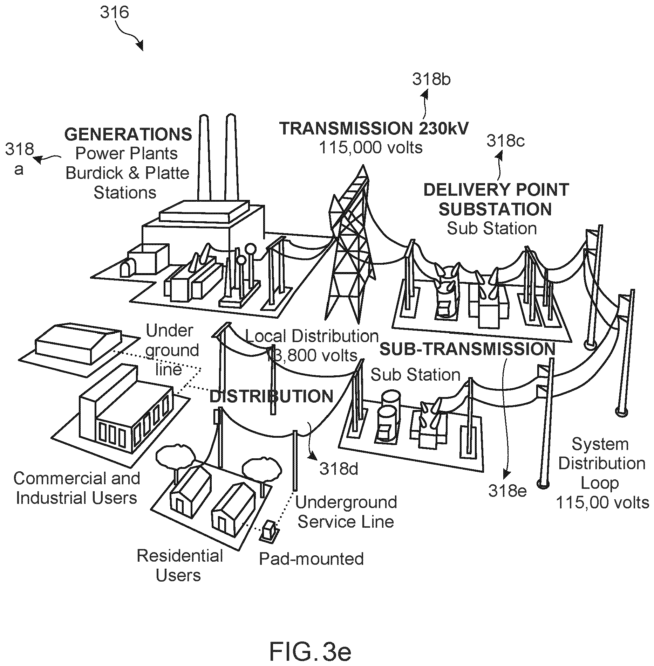

FIG. 3 is a flowchart illustrating example steps for a method for adaptive arrangement of network resource in the electrical network according to some embodiments. The method (300) is performed for arrangement of the network resources in the electrical network.

At step 302, the method (300) comprises receiving the one or more network criteria to identify network-related information. The one or more network criteria are used to arrange the one or more network resource from the plurality of network resources in the electrical network.

At step 304, the method (300) comprises generating the first topology of the electrical network according to the received one or more network criteria. The first topology has the first arrangement of the one or more network resources in each node in the first topology.

At step 306, the method (300) comprises identifying the effect of the one or more network constraint parameters associated with each network node over the first arrangement of the one or more network resources in the first topology. The effect identifies the performance of the one or more network resources in the first arrangement in the first topology.

At step 308, the method (300) comprises selecting the second arrangement of the one or more network resources in the first topology according to the effect of the each constraint over the one or more network resources.

In some embodiments, project engineers and customers may have an ability to utilise a software to explore the most optimal design solution based on the one or more network constraint parameters/network characteristics. The one or more network constraint parameters may be defined as to determine an optimal location of the clock source and optimal location for a redundant clock source in the network. The proposed method (300) and system (200) may be beneficial in brown field projectswhere additional network topology is added over a period of time, and maintaining the optimal location of network elements such as the clock source element is an after-thought. The proposed method (300) and system (200) allows the project engineer or the customer to determine how the current network/network topology may be extended while maintaining the one or more network constraint parameters/network characteristics and simultaneously limiting cost of the network design.

In some embodiments, the proposed method (300) may be a software-based automatic network design solution approach that provides multiple design options based on high-level intents/ the one or more network criteria provided by the user. The proposed method (300) may be applied for a completely new network design or as an additional design requirement on an existing network.

The proposed method (300) and system (200) generates network design/network topology options with optimal clock source location and ensuring minimal number of additional links in the network topology. Further, the proposed method (300) and system (200) may be utilized to ensure that the new designs of the network do not result in any spanning tree loops or unnecessary hops in the network. The proposed method (300) and system (200) at first receives a few high-level English instructions/the one or more network criteria from the user. The one or more network criteria describes the network elements and their placements over a 2-D scaled map. The proposed method (300) and system (200) then generates an appropriate design/ first topology based on the one or more network constraints parameters/multiple features. The one or more network constraint parameters may include, but are not limited to, the network designs should optimally distribute primary and secondary clock signals limited by number of hops, the network design is limited by user-specified maximal number of hops in core ring and sub-rings of the network, the network design should remove any redundant spanning tree loops, if needed, the user may select any one or multiple requirements in the network design. Further, the proposed method (300) and system (200) proposes the selection of an appropriate network node from the plurality of network nodes for allocation of the clock source along with the direction of the percolation of the clock information. Furthermore, the proposed method (300) and system (200) allows expansion of a backbone network by adding a subnetwork to the network design/first topology.

In some embodiments, the proposed method (300) and system (200) considers the presence of the subnetwork during the transfer of clock information using a shortest path. The proposed method (300) and system (200) also proposes the selection of an alternative path for sending the clock information in case of a link failure. In some embodiments, the proposed method (300) and system (200) may remove any spanning tree loops from the network design/first topology and presents the network design with minimal links to the user.

In some embodiments, for generating different network designs the one or more network constraints parameters are considered such as addition of a minimal number of links between the network nodes for satisfying maximum hop criteria, identification of the appropriate network node for the clock source distribution, and removal of spanning tree loops within the network design. In some embodiments, the proposed method (300) and system (200) may be configured to extracts requirement of the users based on the one or more network criteria/high-level intents specified by the user. The one or more network criteria/information may be provided in the form of a voice command or a text by the user. Further, the extracted requirement/networking information from the one or more network criteria is utilized for automatic network design/network topology.

In some embodiment, the proposed method (300) and system (200) displays the automatic network design after adding the minimal number of links for satisfying the maximum allowable hops between the network nodes. In some embodiments, the proposed method (300) and system (200) uses a heuristic approach for the addition of extra links in a ring network to satisfy the maximum allowable hop criteria between the network nodes. Thereafter, the proposed method (300) and system (200) performs selection of the appropriate location for the clock source information among all the network elements along with the direction of the percolation of clock information. Further, the proposed method (300) and system (200) considers presence of the subnetwork during the transfer of clock information from the core network to the sub-networks. Further, the proposed method (300) and system (200) applies Floyd's algorithm to select the shortest path for transferring the clock information. In an embodiment, some links may experience temporary failure in the network design. In such a scenario, the proposed method (300) and system (200) proposes the selection of an alternative path for sending the clock information in case of the link failure. In an embodiment, the proposed method (300) and system (200) applies Prism's algorithm to remove any spanning tree loops within the network design.

In some embodiments, the proposed method (300) and system (200) receives the one or more network criteria which comprises removable of the spanning tree loops between the at least two network nodes. For example, FIGs. 3a-3c may be considered for removing the spanning tree loops within the network design from the perspective of the clock propagation among the plurality of network nodes. The proposed method (300) and system (200) considers the standard spanning tree loop removal algorithm such as the Prism's algorithm. For example, FIG. 3a shows a network topology (310a). The network topology (310a) comprises network nodes from 0 to 8, as shown in FIG. 3a. The network topology (310a) comprises more than one spanning tree loop. For example, first spanning tree loop may be between network nodes 7, 1, 2, 6, and 7 second spanning tree loop may be between network nodes 7, 1, 2, 8, and 7, third spanning tree loop may be between network nodes 7, 8, 6 and 7, fourth spanning tree loop may be between network nodes 2, 3, 5, 6, and 2, fifth spanning tree loop may be between network nodes 2, 3, 5, and 2, sixth spanning tree loop may be between network nodes 2, 5, 6, 8, and 2, and so on. A person skilled in the art may understand that any network nodes that form a loop is a spanning tree loop and is not limited to the above-mentioned examples of spanning tree loop.

The proposed method (300) and system (200) utilises the Prism's algorithm to remove the spanning tree loop from the network topology (310a) shown in FIG. 3a. The Prism's algorithm may provide two results upon removing the spanning tree loop as shown in FIGs. 3b and 3c.

FIG. 3b shows one network topology (310b) with no spanning tree loops. For example, in this network topology (310b), spanning tree loops such as 7, 1, 2, 6 and 7; 2, 5, 6, 8 and 2, etc is removed. Similarly, FIG. 3c shows another network topology (310c) with no spanning tree loops. For example, in this network topology (310c), spanning tree loops such as 7, 0, 1, and 7; 2, 3, 5 and 2, etc is removed.

Thus, the method (300) and system (200) may use the Prism's algorithm and may recommend multiple topology options for propagating the clock information with the cost trade-off to the user. The clock propagation information is overlayed on each of the selected topology. Thereafter, the user needs to decide which topology may be selected for their purpose.

In some embodiments, the proposed method (300) and system (200) provides automatic network design by utilizing the one or more network criteria/high-level intent provided by the user. In some embodiment, the user at first specifies the requirement in terms of the number of network nodes, the location of the network nodes, the connection between the network nodes, the maximum number of allowable hops, synchronization among the network nodes, and the like. Further, based on the requirement of the user the network is designed that complies with all the stated criteria.

In some embodiments, the designed network may undergo temporary link failure due to several reasons. In such a case, transferring of the clock information among the network nodes by selecting alternative path is necessary. The transferring of the clock information is necessary, due to the fact that during the link failure within the network nodes, if the clock information is not sent to the network nodes, then routing of the packet within the network may be hampered. Thus, resulting in the overall degradation of the network performance. Similarly, presence of a loop within the network nodes often leads to indefinite routing of the packet and leads to improper routing of the packets. To avoid this, the proposed method (300) and system (200) utilises Spanning Tree Protocol (STP) to activate some of the routing paths and deactivate the others within the network nodes. Thus, selection of the appropriate links between the network nodes for avoiding loops is crucial.

In some embodiments, additional details of the proposed method (300) are provided. The proposed method (300) may perform extraction of network information from high-level intents/the one or more network criteria. In this process, the proposed method (300) extracts the network-related information for the network design, from the one or more network criteria provided by the user. The user provides the one or more network criteria/information in a high-level language. Further, the extracted network-related information includes maximum allowable hops in the network, maximum number of hops involved by GPS for transferring the clock information, maintaining the clock synchronization, total number of network nodes present in the backbone network, and the position of the network nodes. Upon extraction of the network-related information, the proposed method (300) utilises to automatically generate the design of the network.

In some embodiments, the proposed method (300) and system (200) receives the one or more network criteria which comprises the maximum number of hops intended for use in transferring the clock information between the plurality of network nodes. In some embodiments, the maximum number of hops involved by the GPS for transferring the clock information is a user-defined design input of the one or more network criteria. The user may define the maximum number of hops intended for use in transferring the clock information during design phase or during operation phase of the electrical network.

In some embodiments, the proposed method (300) and system (200) receives the one or more network criteria which comprises the total number of network nodes present in the subnetwork. In some embodiments, the total number of network nodes present in the subnetwork depends on a span of the electrical network over a geographical region. In another embodiment, the total number of network nodes present in the sub network is based on the spread of the plurality of network nodes over the geographical region. For example, the entire south of India is a part of one region in transmission network. In an example, size of the plurality of network nodes could be between 500 to 5000 network nodes arranged in rings with multiple sub-rings.

In an example, FIG. 3d shows one such network topology (312) of the electrical network spanning over large geographical area. FIG. 3d may have several hundred network nodes arranged in rings. In some embodiments, FIG. 3d shows network diagram of a high voltage transmission system, showing the interconnection (314) between different voltage levels. In some embodiment, FIG. 3d depicts electrical structure of the electrical network.

In some embodiments, the proposed method (300) and system (200) receives the one or more network criteria which comprises the position of each network node in the electrical network. In some embodiments, the plurality of network nodes overlaps with entities of the electrical network in the geographical area. For example, FIG. 3e shows different electrical network entities such as Generation (318a), Transmission (318b), Delivery point substation (318c), Distribution (318d), and Sub-transmission (318e), etc. In an example, the communication network comprises communication network node/plurality of network nodes located in each of the electrical network entities. That is, there may be one communication network node (alternatively referred as communication network point) at the generation (318a), one at the transmission node (318b), one in the delivery point substation (318c), one in the distribution (318d), and one in the sub-transmission (318e) etc. Thus, the location/position of the communication network nodes/plurality of the network nodes is fixed by design in the electrical network.

In some embodiment, the proposed method (300) designs the network/first topology with the maximum allowable hops. The proposed method (300) designs the network depending on the maximum allowable hops, which is extracted from the one or more network criteria/high-level intent provided by the user. The proposed method (300) starts designing the network with a ring topology. Thaereafter, the proposed method (300), starts adding new links between the network elements unless the maximum allowable hop criteria are satisfied by using the heuristic method. The heuristic method aims to reduce the addition of new links between network elements besides satisfying the maximum allowable hop criteria. Thus, with the considerable reduction in the addition of the number of links, the overall cost involved in physically setting up the network is also reduced substantially. Moreover, it eliminates the need for human intervention in designing the network.

In some embodiments, the proposed method (300) identifies the flow of the clock information within the network. The proposed method (300) identifies the flow of clock information, which is sent by the GPS, considering the maximum allowable hops for transferring the clock information, when all the network nodes are connected to each other. The proposed method (300) selects the shortest path for transferring the clock information to the maximum number of network elements for maintaining the clock synchronization within the network. The selection of the shortest path represents the best possible route to transfer the clock information while satisfying the maximum allowable hop criteria. The proposed method (300) utilises the Floyd's algorithm to generates all-pairs of the shortest paths within the network for transferring the clock information. In an embodiment, after generating all-pairs of the shortest paths, the proposed method (300) selects the shortest path for transferring the clock information if the shortest path satisfies the maximum allowable hop criteria.

In some embodiment, the proposed method (300) identifies the flow of clock information in case of link failure within the network. During the link failure within the network, the proposed method (300) forwards the clock information through a second-best alternative route for the clock synchronization within the network. For example, it is often observed that a particular link may experiences temporary failure within the network. Further, it may be possible that the particular link that experiences the temporary failure may be the shortest path. Hence, to ensure the proper transfer of the clock information for maintaining the clock synchronization, the proposed method (300) may select an alternative path for distributing/transferring the clock information within the network nodes. The alternative path may be a second shortest path for forwarding the clock information.

In some embodiment, the proposed method (300) removes the loop within the network. Upon generating/designing the network/first topology, there may exist loops within the network that may lead to broadcast storms resulting in network failure. To overcome this, legacy networks apply the spanning tree protocol which temporarily removes the loops within the network. Similarly, the proposed method (300) also removes the loops within the network through the application of PRIM's algorithm. In an embodiment, the links that are not selected by the PRIM's algorithm may be utilized in case of link failure. Hence, the proposed method (300) not only proposes different network designs as per the requirement of the user but also considers the presence of broadcast storms and resolves it by removing the loops within the designed network.

In some embodiment, during operation phase, the proposed method (300) and system (200) may continuously monitor quality of clock signal strength at each network node and may correlate it with respect to other selected network traffic functions. The network traffic functions may include, traffic load, delay, packet loss, etc. Further, based on the monitoring the proposed method (300) and the system (200) may determine a trend of the clock signal strength and may use this knowledge to determine the most optimal location of the clock source or enable multiple clock source in the network.

Further, the proposed method (300) and system (200) may perform re-routing of the clock source over existing design of the network or may provide a new topology if certain links are disabled within the network. In some embodiment, the proposed method (300) and system (200) recommends adjusting the clock signal strength for each clock source that is enabled over the network. In some embodiment, the additional clock source should follow the same direction for the percolation of the clock as selected by the other clock sources.

In some embodiment, the proposed method (300) and system (200) may provide the user with multiple options with cost and performance trade-off during the design phase of the network. Further, based on the recommendation the user may select certain clock location options from the multiple options. The clock locations may be dynamically selected if a similar clock strength is measured during the operation phase. This way, the network can autonomously switch or enable clock arrangement as pre-selected by the user.

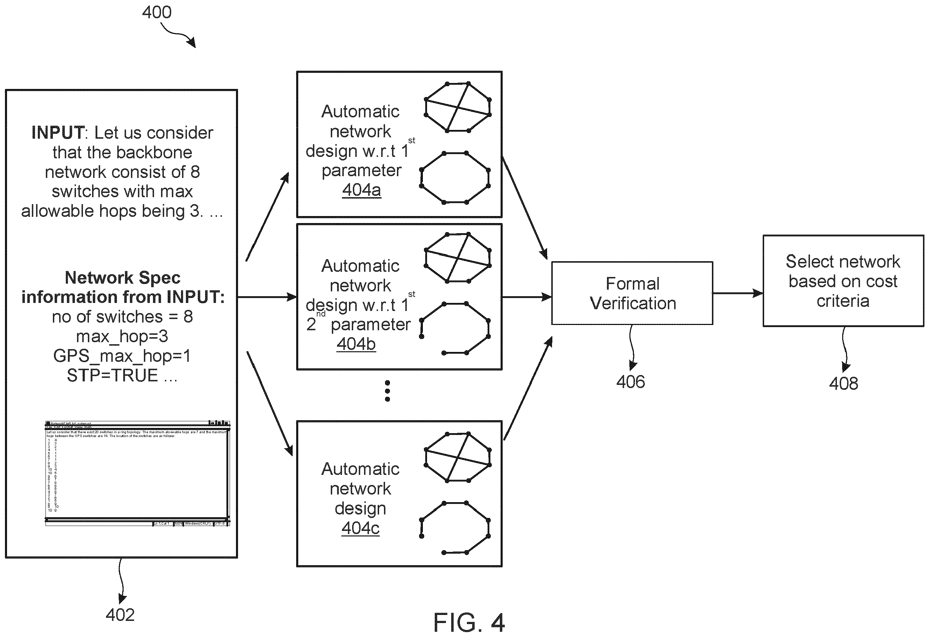

FIG. 4 discloses schematic block diagram illustrating workflow of automatic arrangement of network resources for a network design according to some embodiments.

FIG. 4 shows the schematic block diagram (400), where initially the proposed method (300) and system (200) at (402), receives the one or more network criteria from the user for generating the first topology/network design. For example, the one or more network criteria may include, eight network nodes, location of the eight network nodes, maximum allowable hops are three, GPS_max_HOP is one, and spanning tree protocol is true. The proposed method (300) and system (200) utilises the one or more designs inputs and generates automatic network design with respect to the one or more network constraint parameters. For example, the proposed method (300) and system (200) may generate automatic network design (404a, 404b... and 404c) as shown in FIG. 4. Further, the proposed method (300) and system (200) may perform formal verification at (406). Thereafter, the user may select one of the network designs based on cost criteria at (408).

In some embodiments, in FIG. 4 the user may first provide the maximum number of hops that may be considered for transferring the clock information between the plurality of network nodes at (402). In an example, a typical electrical communication network may consider about 10-15 hops for the transferring of clock information while maintaining the clock synchronization between the plurality of network nodes.

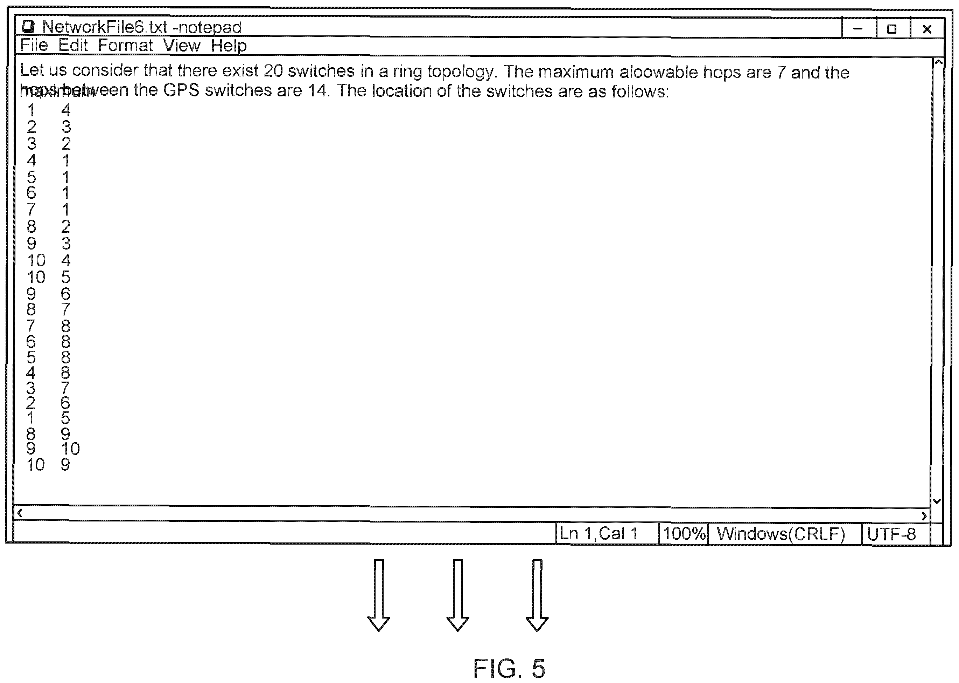

FIG. 5 shows a block diagram illustrating extraction from the one or more network criteria for automatic arrangement of network resources for the network design. FIG. 5 shows the one or more network criteria that may be received from the user. The proposed method (300) and system (200) utilise the one or more network criteria to extract the network-related information for generating automatic network designs.

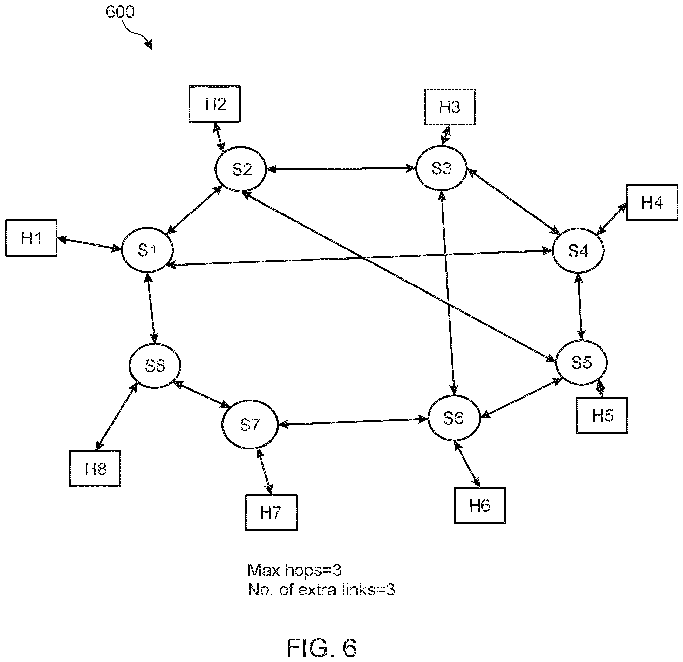

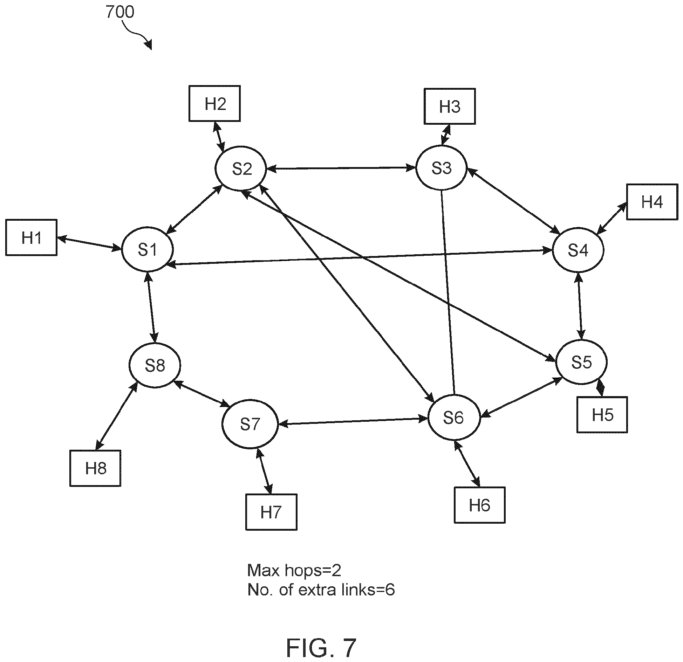

FIGs. 6 and 7 show plurality of network nodes arranged at fixed location by a communication network according to some embodiments. In some embodiment, the topology of the plurality of network node is fixed by design due to the position of electrical network entities. However, there is flexibility in deciding the interconnection between each of the network nodes. In some embodiment, there is flexibility in deciding which interconnection may be enabled or disabled between the plurality of network nodes, provided that there are enough connections between the plurality of network nodes.

In some embodiment, due to fixed position of the plurality of network nodes, the plurality of network nodes may be overprovisioned in the interconnection between them. For example, this is shown in FIGs. 6 and 7.

FIG. 6 shows a network topology (600) with eight network nodes comprising eight switches (i.e., S1 to S8) arranged at fixed location, and eight hops (i.e., H1 to H8). For FIG. 6 maximum number of allowable hops is three and number of extra links is three. Similarly, FIG. 7 shows another network topology (700) with eight network nodes comprising eight witches (i.e., S1 to S8) arranged at fixed location, and eight hops (i.e., H1 to H8). For FIG. 7 maximum number of allowable hops is two and number of extra links is six.

In some embodiments, FIGs. 6 and 7 show two network topologies (600 and 700) with same number of network nodes with varying interconnections between them. FIG 6 shows the network topology (600) with less interconnections between the plurality of network nodes. While FIG 7 shows the network topology (700) with more interconnections between the plurality of network nodes.

In some embodiment, from the perspective of propagating the clock information among the plurality of network nodes, the method (300) and system (200) may recommend whether a certain connection needs to be maintained or could be disabled between the plurality of network nodes. In some embodiments, the method (300) and system (200) may provide the cost trade-off for multiple network connections, then the user may select an appropriately suitable network topology.

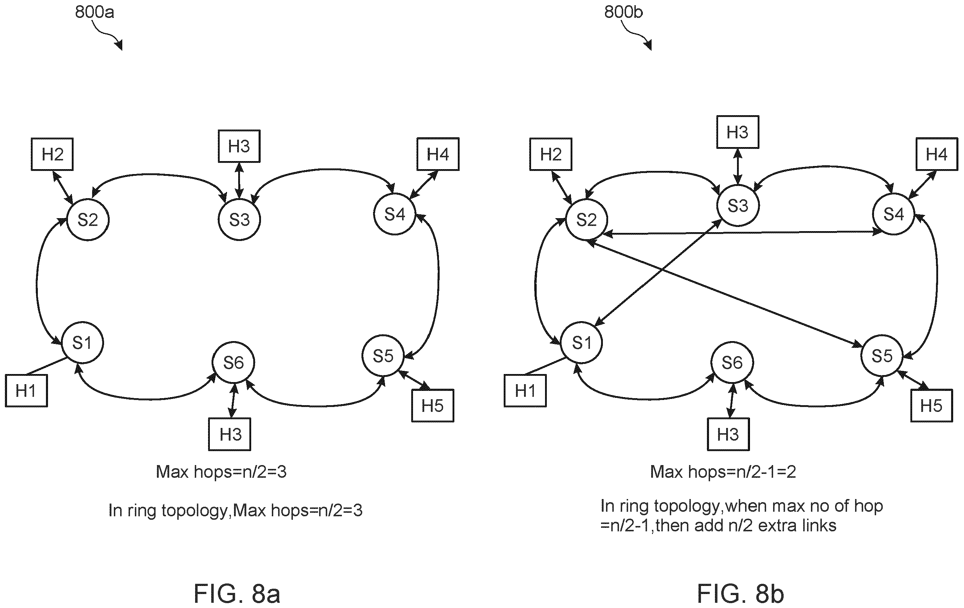

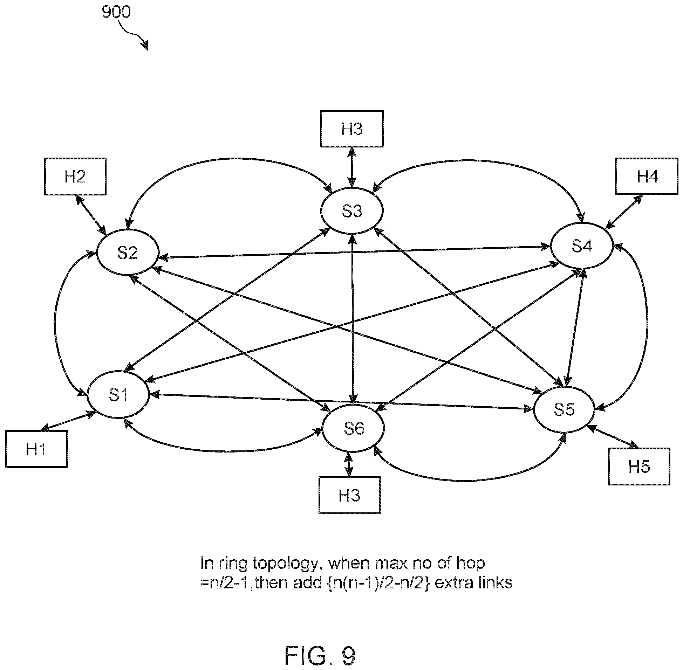

FIGs. 8a-8b and 9 show steps of generating topology of electrical network with respect to maximum allowable hops according to some embodiments. FIG. 8a shows a network topology (800a) with six network nodes comprising six switches (i.e., S1 to S6) arranged at fixed location, and five hops (i.e., H1 to H5) in a ring topology. In the network topology (800a) of FIG. 8a maximum number of allowable hops is three with no extra links for the ring topology.

$$\text{Max hop} = n/2 = 6/2 = 3.$$

FIG. 8b shows another network topology (800b) with six network nodes comprising six switches (i.e., S1 to S6) arranged at fixed location, and five hops (i.e., H1 to H5) in the ring topology. In the network topology (800b) of FIG. 8b maximum number of allowable hops is two with three extra links.

$$\text{Max hop} = n/2\text{-}1 = 6/2\text{-}1 = 2 \text{ and extra links} = n/2 = 6/2 = 3.$$

FIG. 9 shows another network topology (900) with six network nodes comprising six switches (i.e., S1 to S6) arranged at fixed location, and five hops (i.e., H1 to H5) in the ring topology. In the network topology (900) of FIG. 9 maximum number of allowable hops is two with six extra links.

$$\text{Max hop} = n/2\text{-}1 = 6/2\text{-}1 = 2 \text{ and extra links} = \{n*(n\text{-}1)/2\text{-}n/2\} = \{6*(6\text{-}1)/2\text{-}6/2\} = 6.$$

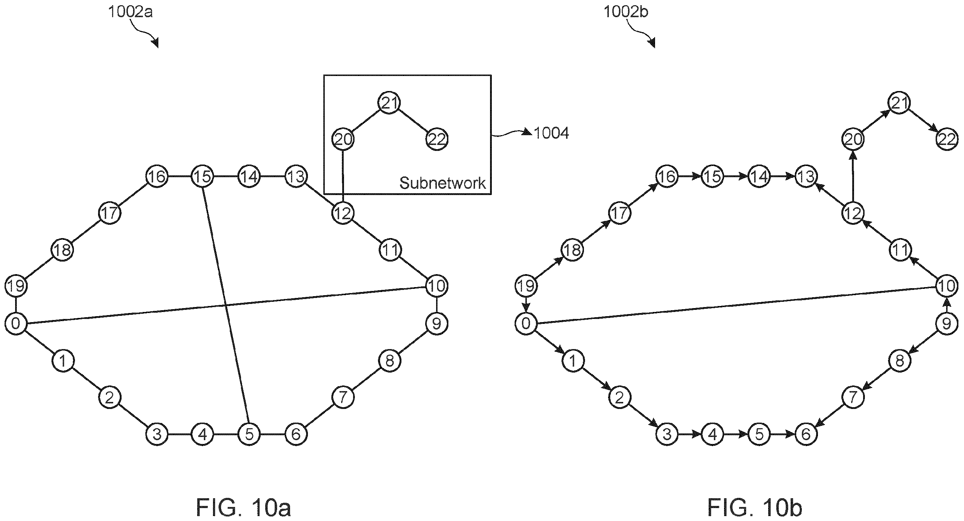

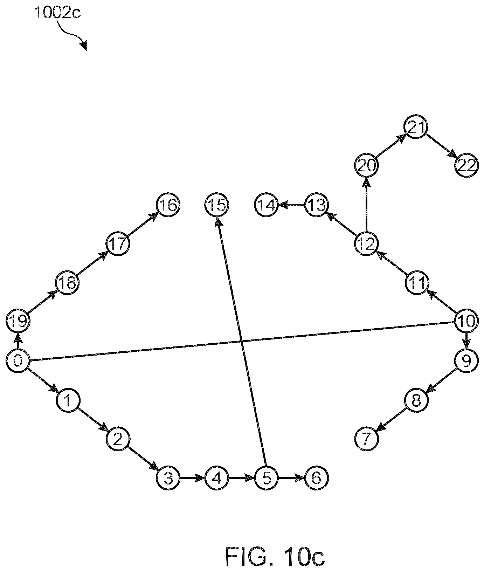

FIGs. 10a-10c show a flow of clock information in the generated topology according to some embodiments. FIG. 10a shows a backbone network (1002a) having network nodes 0 to 19 and additional subnetwork (1004) having network nodes 20 to 22. FIG. 10b shows a clock source (i.e., GPS) connected to network node 0 and arrow marks showing the flow of clock information in the backbone network (1002b) and the subnetwork (1004). FIG. 10c shows the clock source (i.e., GPS) connected to network node 1 and arrow marks showing the flow of clock information in the backbone network (1002c) and the subnetwork (1004).

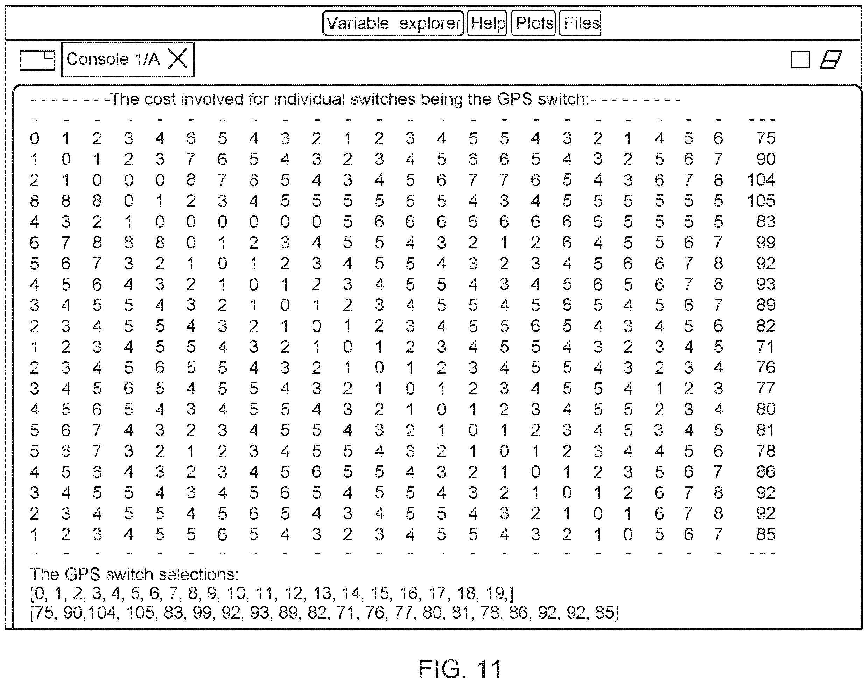

FIG. 11 shows cost involved in arranging network resources according to some embodiments. FIG. 11 shows the cost involved in connecting the GPS with the individual network nodes. The cost is calculated in terms of the number of hops required in forwarding the clock information among other network elements present within the network from the network element connected with the GPS device.

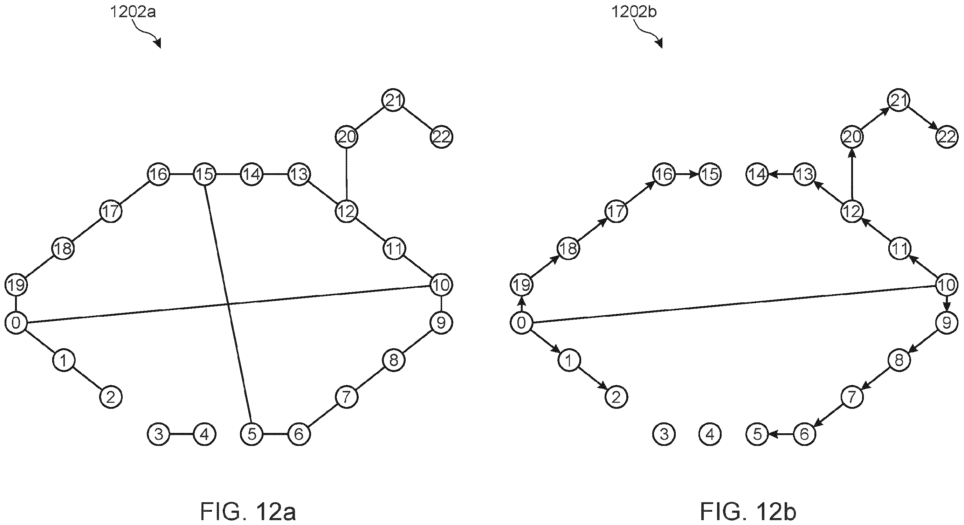

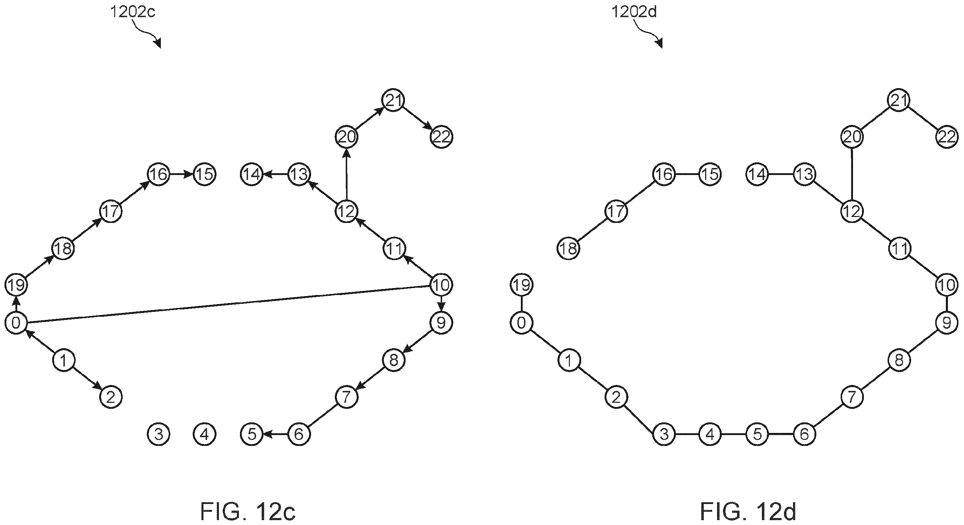

FIGs. 12a-12d show adaptive arrangement of network resources in the electrical network according to some embodiments. FIG. 12a shows the backbone network (1202a) having network nodes 0 to 19 and additional subnetwork (1004) having network nodes 20 to 22. The network (1202a) may experience a link failure between network nodes 2, 3 and 4,5 as shown in FIG. 12a. In such a scenario, the flow of the clock information may change within the network. FIG. 12b shows the flow of the clock information from the network node 0 to other network nodes of the network (1202b) when the link failure between network nodes 2, 3 and 4, 5 occurs. FIG. 12c shows an alternate path for the flow of the clock information from the network node 0 to other network nodes of the network (1202c) when the link failure between network nodes 2, 3 and 4, 5 occurs.

Further, FIG. 12d shows removal of the spanning tree loops present within the network (1202d) design by applying the STP. For example, here the spanning tree loop between the network nodes 0, 19, 18, 17,..,10 and 0 is removed in FIG. 12d.

In some embodiment, the clock signal strength or preciseness of the quality of clock signal may be identified by using different measurement methods. The different measurement methods are Maximum Time Interval Error (MTIE), Time Deviation, Phase Noise measurement, etc. In an embodiment, one of the most commonly used measurement method for determining the clock quality is the maximum time interval error. In this case, a received clock waveform from the network node is first compared to an available reference. Then, a phase error (usually measured in nanoseconds) is calculated for an observation interval. This phase shift is known as Time Interval Error (TIE). The MTIE is a function of the observation interval. In some embodiment, as a window of the observation interval moves through a dataset or an input waveform, a peak-to-peak distance between a largest and smallest TIE in that window is recorded. This distance varies as the window of the observation interval moves, reaching its maximum at a specific window position. This maximum distance is known as MTIE for the given observation interval.

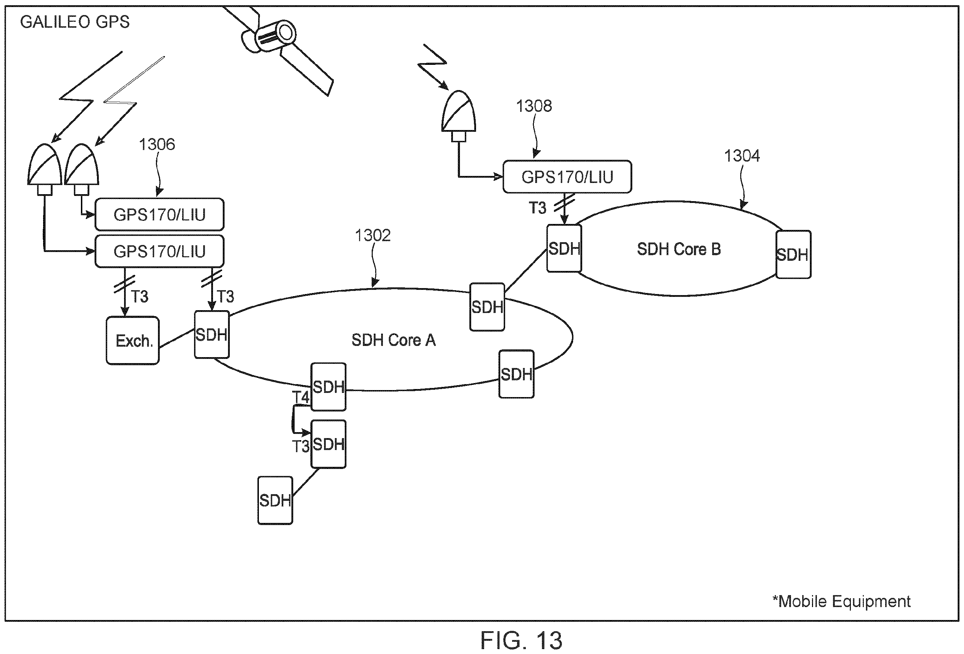

FIG. 13 shows a core network connected to a ring network with network resources according to some embodiments. FIG. 13 shows a Synchronous Digital Hierarchy (SDH) core ring network A (1302), that is connected to another ring network SDH core B (1304). In this case both the core networks (1302 and 1304) have one SDH node (also referred as network node) that has a GPS clock (1306 and 1304) input provision available. The other network nodes then receive this clock information from the SDH node that has the GPS (1306 and 1304) provision. The other network nodes in this case can utilize the MTIE method wherein a comparison of the received clock signal is made with the reference waveform to determine the clock signal strength.

In some embodiments, upon comparison if a deviation is determined to be higher than what is allowed by the standard (PRC ITU-Rec. G.811 or PRC ITU-Rec. G.812, etc) then the quality of clock is considered to be lower than what is tolerable or the threshold. In such a scenario, the proposed method (300) and system (200) proposes to allocate the GPS or the clock source in other network nodes of the network, so that the percolation of the clock around the network remains within the allowable standard quality.

In some embodiment, the clock quality/clock signal strength is classified at 14 different levels of tolerable values. In an embodiment, the furthest hop in the network is assumed to receive the poorest quality of the clock, however it should not go below a given threshold of the clock quality. The threshold of the clock quality is subjective and depends on what standard or the measurement method is utilized for measuring the clock quality of the network. In some embodiment, the clock quality is continuously measured in all the network nodes that do not have the GPS (1306 and 1304) provision. In an embodiment, each of the non-GPS network nodes may independently measure the clock quality. Further, the measured clock quality, is then then fed to the system (200) which then deploys the measurement method to determine the best possible allocation of the clock source for the given changes in the network.

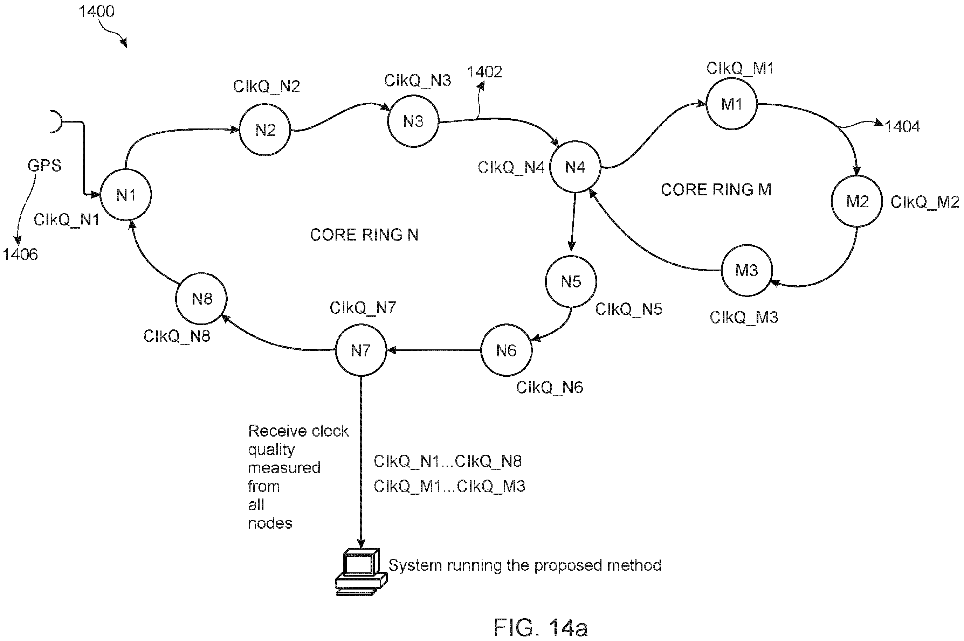

FIGs. 14a-14d show architecture of the system (200) for adaptive arrangement of network resource in the electrical network according to some embodiments.

FIG. 14a consist of two rings, core ring N (1402) and core ring M (1404). The core ring N (1402) has eight network nodes (i.e., N1 to N8) and the core ring M (1404) has three network nodes (i.e., M1 to M3). The N1 network node has the provision of the GPS clock source (1406) and all other network nodes receive the clock information from the N1 network node. In some embodiment, the other network nodes continuously monitor the clock quality received at their respective network node. Further, the clock quality measurement from every network node is periodically transferred to the system (200) which is running the proposed method (300) to determine if the current allocation of clock source is fine or not within the network. In case the clock quality drops at any one or more network nodes in the network, the proposed method (300) then determines additional location of the clock source (GPS) with the various cost factor.

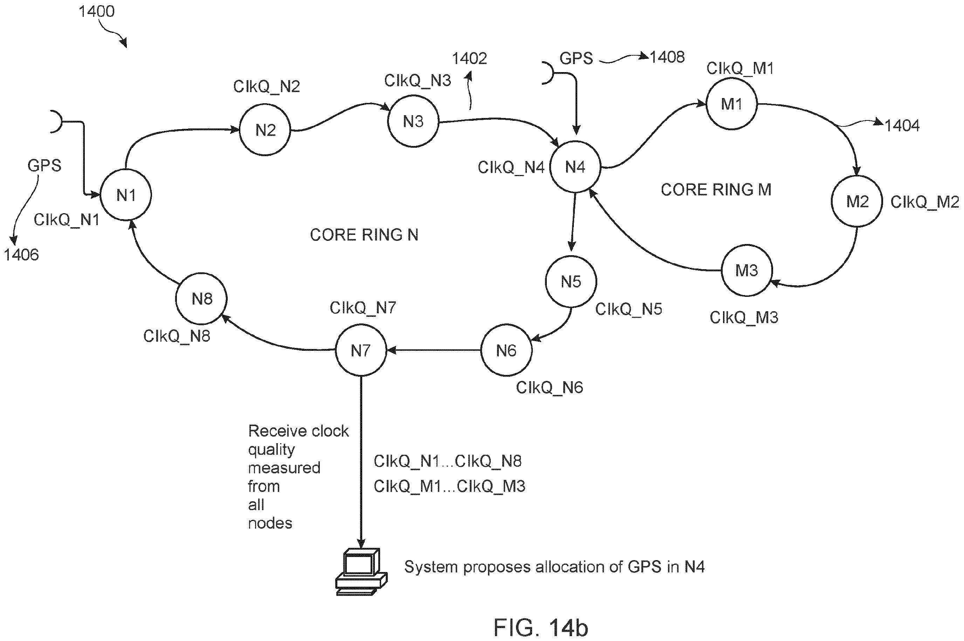

In some embodiments, the system (200) may determine that N4 network node may also be provisioned as an additional location of the clock source (1408) as shown in FIG. 14b. In some embodiment, upon determining the additional location of the clock source (1408), the system (200) presents the clock allocation vs the cost trade-off to the user. Further, in some embodiment, the system (200) may present the different locations for the clock sources (1406 and 1408) based on the cost trade-off that pertains to allocation of the clock sources (1406 and 1408) at different locations while considering the other network constraint parameters such as hop count, spanning tree loop avoidance. The user may then consider whether to go ahead with the proposed allocation of the clock sources (1406 and 1408) or not.

In some embodiment, the clock performance is measured during the operation phase of the network at each network node, therefore, the performance of the clock source may be subjected to other metrics that determine the network performance. The other metrics may include, data traffic, throughput at certain section of the network, etc.

In some embodiments, the proposed system (200) which runs the proposed method (300) may also correlate the other metrics that determine the network performance with the clock quality. In some embodiments, the system (200) could utilize machine learning method that learn the correlation between data bottleneck at a certain part of the network with the clock quality around the network to determine appropriate allocation of the clock sources (1406 and 1408) that can maintain a good quality of the network.

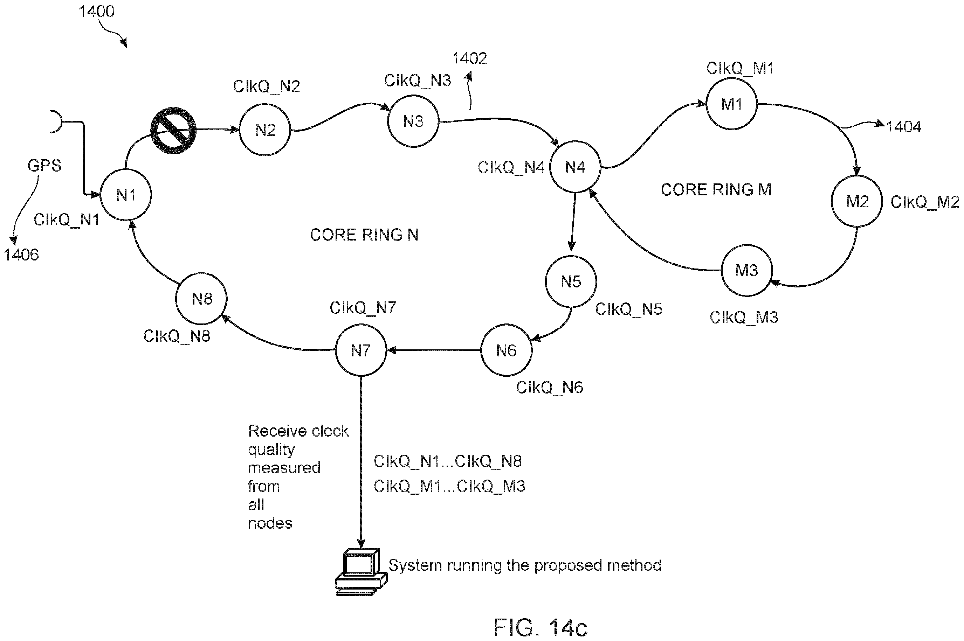

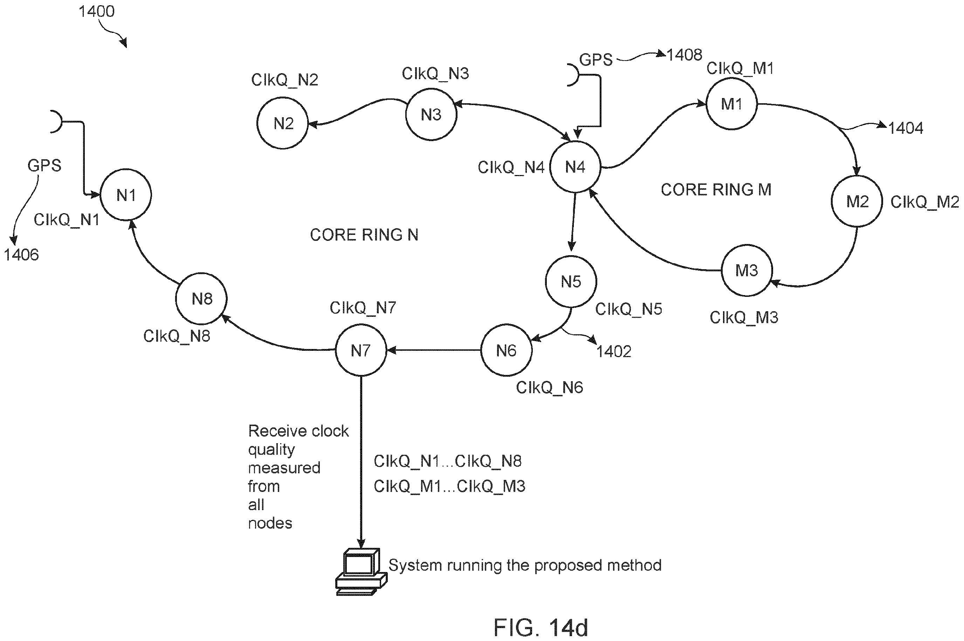

FIG. 14c illustrates congestion between the N1 network node and N2 network node of the network (1402) as a result the clock quality from N1 network node towards the direction of the N2 and N3 network node is affected. In such a scenario, the system (200) suggests allocating a new clock source (GPS) (1408) at the N4 network node as shown in FIG. 14d. Thus, the clock percolation is reversed from the N4 network node to the N3 and N2 network node as shown in FIG. 14d. Further, the connection between the N1 and N2 network node is disabled as the clock source (1408) can traverse to the N2 network node directly from the N4 network node.

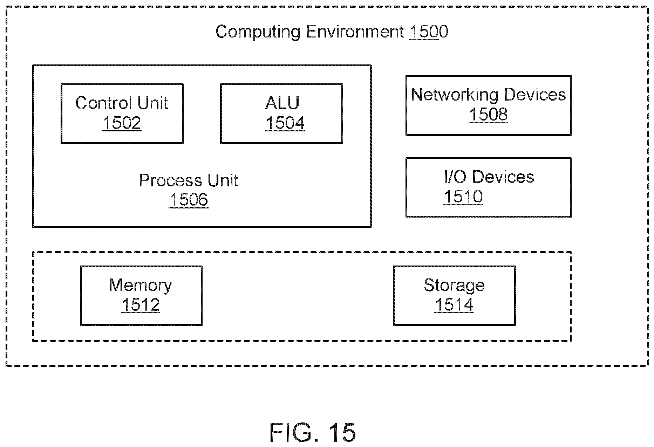

FIG. 15 illustrates an example computing environment (1500) implementing a system (200) and a method (300) as shown in FIGS. 2, and 3 for adaptive arrangement of network resource in electrical network. As depicted in FIG. 15, the computing environment (1500) comprises at least one data processing module (1506) that is equipped with a control module (1502) and an Arithmetic Logic Unit, ALU (1504), a plurality of networking devices (1508) and a plurality Input output, I/O devices (1510), a memory (1512), a storage (1514). The data processing module (1506) may be responsible for implementing the platform and method described in

FIGS. 2 and 3 respectively. For example, the data processing module (1506) in some embodiments is equivalent to the controlling circuitry of the platform described above in conjunction with FIG. 2. The data processing module (1506) is capable of executing software instructions stored in memory (1512). The data processing module (1506) receives commands from the control module (1502) in order to perform its processing. Further, any logical and arithmetic operations involved in the execution of the instructions are computed with the help of the ALU (1504).

The computer program is loadable into the data processing module (1506), which may, for example, be comprised in an electronic apparatus, such as the platform. When loaded into the data processing module (1506), the computer program may be stored in the memory (1512) associated with or comprised in the data processing module (1506). According to some embodiments, the computer program may, when loaded into and run by the data processing module (1506), cause execution of method steps according to, for example, any of the methods illustrated in FIGS. 2 and 3, or otherwise described herein.

The overall computing environment (1500) may be composed of multiple homogeneous and/or heterogeneous cores, multiple CPUs of different kinds, special media and other accelerators. Further, the plurality of data processing modules (1506) may be located on a single chip or over multiple chips.

The algorithm comprising instructions and codes required for the implementation are stored in either the memory (1512) or the storage (1514) or both. At the time of execution, the instructions may be fetched from the corresponding memory (1512) and/or storage (1514) and executed by the data processing module (1506).

In case of any hardware implementations various networking devices (1508) or external I/O devices (1510) may be connected to the computing environment to support the implementation through the networking devices (1508) and the I/O devices (1510).

The embodiments disclosed herein can be implemented through at least one software program running on at least one hardware device and performing network management functions to control the elements. The elements shown in FIG. 15 include blocks which can be at least one of a hardware device, or a combination of hardware device and software module.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the disclosure.

**Claims**

1. A method for adaptive arrangement of network resources in an electrical network, said electrical network comprising a plurality of network nodes being arranged at fixed locations and interconnectable to one another by a communication network, the method comprising:

   receiving one or more network criteria to identify network-related information, wherein the one or more network criteria are used to arrange one or more network resources from a plurality of network resources in the electrical network;
   generating a first topology of the electrical network according to the received one or more network criteria, wherein the first topology has a first arrangement of the one or more network resources in each node in the first topology;
   identifying an effect of one or more network constraint parameters associated with each network node over the first arrangement of the one or more network resources in the first topology, wherein the effect identifies a performance of the one or more network resources in the first arrangement in the first topology; and
   selecting a second arrangement of the one or more network resources in the first topology according to the effect of the each constraint over the one or more network resources.

2. The method according to claim 1, wherein the one or more network criteria comprises at least one of:

   a maximum number of allowable hops for each network node;
   a maximum number of hops intended for use in transferring a clock information between the plurality of network nodes by maintaining clock synchronization;
   a total number of network nodes present in a subnetwork;
   a position of each network node in the electrical network;
   a topology for arranging the plurality of network nodes in the electrical network;
   a positioning of one or more clock sources in the electrical network;
   a flow of the clock information within the electrical network; and
   spanning tree loops to be removed between at least two network nodes.

3. The method according to any of the preceding claims, wherein the one or more network resources comprises at least one of a clock source, a GPS module, and hops in the electrical network.

4. The method according to any of the preceding claims, wherein the one or more network constraint parameters comprises signal strength of a network source located in the electrical network, throughput of each of the plurality of network nodes, traffic load, latency, and packet losses, addition or deletion of sub-networks in the first topology.

5. The method according to any of the preceding claims, wherein the first arrangement comprises a position of the one or more networks resource in each node, and connectivity of each network resource with other network resources in the plurality of network resources.

6. The method according to any of the preceding claims, wherein the effect is identified by comparing performance of the one or more network resources with one or more performance threshold values for each network constraint parameter.

7. The method according to any of the preceding claims, comprising:
   generating one of: an updated first topology or a second topology according to the second arrangement of the one or more network resources in the first topology of the electrical network.

8. The method according to any of the preceding claims, wherein the second arrangement comprises at least one of:

   a change in the maximum number of allowable hops for each network node;
   a change in the maximum number of hops intended for use in transferring the clock information between the plurality of network nodes by maintaining clock synchronization;
   a change in the total number of network nodes present in the subnetwork;
   a change in the position of each network node in the electrical network;
   a change in the positioning of the one or more clock sources in the electrical network;
   a change in the flow of the clock information within the electrical network;
   a change in the spanning tree loops to be removed between the at least two network nodes; and
   a change in connectivity of the at least one network resource with other network resource.

9. The method according to any of the preceding claims, wherein the first and second arrangement of the one or more network resources represent an arrangement of one or more communication links of the communication network for each of the plurality of network nodes to interconnect with another network node.

10. The method according to claim 1, comprising:

    selecting one of the first arrangement or the second arrangement of the one or more network resources; and
    selecting a network configuration package for the selected the first arrangement or the second arrangement in the first topology, wherein the network configuration package comprises an interface plug-in having an extension, said extension comprising a simulation model,
    wherein via the extension, the simulation model is accessed to simulate results of the first topology for the selected first arrangement or the second arrangement to determine cost criteria associated with the first topology.

11. The method according to any of the preceding claims, wherein the each of the first arrangement and the second arrangement is intended for use in:

    receiving a clock signal from each of the one or more clock sources associated with each network node in the electrical network;
    monitoring quality of the received clock signal associated with each network node by comparing the received clock signal with a reference signal to obtain a deviation value;
    determining a selection of a network node for a new clock source along with a direction of a percolation of the clock information, if the deviation value is above a predefined value; and
    addition of a subnetwork with a backbone network to the electrical network at different instances of time period.

12. A system (200) for adaptive arrangement of network resources in an electrical network, said electrical network comprising a plurality of network nodes being arranged at fixed locations and interconnectable to one another by a communication network, the system (200) comprising:
    a processing circuitry (1008) arranged to:

    receive one or more network criteria to identify network-related information, wherein the one or more network criteria are used to arrange one or more network resource from a plurality of network resources in the electrical network;

generate a first topology of the electrical network according to the received one or more network criteria, wherein the first topology has a first arrangement of the one or more network resources in each node in the first topology;

identify an effect of one or more network constraint parameters associated with each network node over the first arrangement of the one or more network resources in the first topology, wherein the effect identifies a performance of the one or more network resources in the first arrangement in the first topology; and

select a second arrangement of the one or more network resources in the first topology according to the effect of the each constraint over the one or more network resources.

13. A computer program product comprising a non-transitory computer readable medium, having thereon a computer program comprising program instructions, the computer program is loadable into a data processing unit and configured to cause execution of the method according to any of claims 1 through 11 when the computer program is run by the data processing unit.

100

System
200

104

Wireless
communication
network 106

FIG. 1

200

FIG. 2

300

Receive design inputs to identify network-related information — 302

Generate first topology of electrical network according
to the design inputs — 304

Identify an effect of network constraint parameters over first
arrangement of the network resources in the first topology — 306

Select second arrangement of the network resources
in the first topology — 308

FIG. 3

310a

FIG. 3a

FIG. 3b

FIG. 3c

FIG. 3d

316

318b

318
a

**GENERATIONS**
Power Plants
Burdick & Platte
Stations

**TRANSMISSION 230kV**
115,000 volts

318c

**DELIVERY POINT
SUBSTATION**
Sub Station

Under
ground
line

Local Distribution
13,800 volts

**SUB-TRANSMISSION**

Sub Station

**DISTRIBUTION**

318d

System
Distribution
Loop
115,00 volts

Commercial and
Industrial Users

318e

Underground
Service Line

Residential
Users

Pad-mounted

FIG.3e

400

INPUT: Let us consider that the backbone network consist of 8 switches with max allowable hops being 3. ...

**Network Spec information from INPUT:**
no of switches = 8
max_hop=3
GPS_max_hop=1
STP=TRUE ...

402

Automatic network design w.r.t $1^{st}$ parameter
404a

Automatic network design w.r.t $1^{st}$ $2^{nd}$ parameter
404b

Automatic network design
404c

Formal Verification

406

Select network based on cost criteria

408

FIG. 4

EP 4 625 934 A1

EP 4 625 934 A1

NetworkFile6.txt -notepad

File  Edit  Format  View  Help

Let us consider that there exist 20 switches in a ring topology. The maximum aloowable hops are 7 and the maximum hops between the GPS switches are 14. The location of the switches are as follows:

```
1    4
2    3
3    2
4    1
5    1
6    1
7    1
8    2
9    3
10   4
10   5
9    6
8    7
7    8
6    8
5    8
4    8
3    7
2    6
1    5
8    9
9    10
10   9
```

Ln 1,Cal 1    100%   Windows(CRLF)    UTF-8

FIG. 5

600

Max hops=3
No. of extra links=3

FIG. 6

700

Max hops=2
No. of extra links=6

FIG. 7

800b

Max hops=n/2-1=2

In ring topology,when max no of hop =n/2-1,then add n/2 extra links

FIG. 8b

800a

Max hops=n/2=3

In ring topology,Max hops=n/2=3

FIG. 8a

900

In ring topology, when max no of hop
=n/2-1,then add {n(n-1)/2-n/2} extra links

FIG. 9

FIG. 10b

FIG. 10a

1002c

FIG. 10c

Console 1/A ✕

```
- - - - - - - -The cost involved for individual switches being the GPS switch:- - - - - - - - -
-   -   -   -   -   -   -   -   -   -   -   -   -   -   -   -   -   -   -   -   -   -   - - -
0   1   2   3   4   6   5   4   3   2   1   2   3   4   5   5   4   3   2   1   4   5   6    75
1   0   1   2   3   7   6   5   4   3   2   3   4   5   6   6   5   4   3   2   5   6   7    90
2   1   0   0   0   8   7   6   5   4   3   4   5   6   7   7   6   5   4   3   6   7   8   104
8   8   8   0   1   2   3   4   5   5   5   5   5   5   4   3   4   5   5   5   5   5   5   105
4   3   2   1   0   0   0   0   0   0   5   6   6   6   6   6   6   6   6   5   5   5   5    83
6   7   8   8   8   0   1   2   3   4   5   5   4   3   2   1   2   6   4   5   5   6   7    99
5   6   7   3   2   1   0   1   2   3   4   5   5   4   3   2   3   4   5   6   6   7   8    92
4   5   6   4   3   2   1   0   1   2   3   4   5   5   4   3   4   5   6   5   6   7   8    93
3   4   5   5   4   3   2   1   0   1   2   3   4   5   5   4   5   6   5   4   5   6   7    89
2   3   4   5   5   4   3   2   1   0   1   2   3   4   5   5   6   5   4   3   4   5   6    82
1   2   3   4   5   5   4   3   2   1   0   1   2   3   4   5   5   4   3   2   3   4   5    71
2   3   4   5   6   5   5   4   3   2   1   0   1   2   3   4   5   5   4   3   2   3   4    76
3   4   5   6   5   4   5   5   4   3   2   1   0   1   2   3   4   5   5   4   1   2   3    77
4   5   6   5   4   3   4   5   5   4   3   2   1   0   1   2   3   4   5   5   2   3   4    80
5   6   7   4   3   2   3   4   5   5   4   3   2   1   0   1   2   3   4   5   3   4   5    81
5   6   7   3   2   1   2   3   4   5   5   4   3   2   1   0   1   2   3   4   4   5   6    78
4   5   6   4   3   2   3   4   5   6   5   5   4   3   2   1   0   1   2   3   5   6   7    86
3   4   5   5   4   3   4   5   6   5   4   5   5   4   3   2   1   0   1   2   6   7   8    92
2   3   4   5   5   4   5   6   5   4   3   4   5   5   4   3   2   1   0   1   6   7   8    92
1   2   3   4   5   5   6   5   4   3   2   3   4   5   5   4   3   2   1   0   5   6   7    85
-   -   -   -   -   -   -   -   -   -   -   -   -   -   -   -   -   -   -   -   -   -   - - -
```

The GPS switch selections:
[0, 1, 2, 3, 4, 5, 6, 7, 8, 9, 10, 11, 12, 13, 14, 15, 16, 17, 18, 19,]
[75, 90,104, 105, 83, 99, 92, 93, 89, 82, 71, 76, 77, 80, 81, 78, 86, 92, 92, 85]

FIG. 11

EP 4 625 934 A1

FIG. 12b

FIG. 12a

1202d

FIG. 12d

1202c

FIG. 12c

EP 4 625 934 A1

FIG. 13

FIG. 14a

EP 4 625 934 A1

FIG. 14b

FIG. 14c

EP 4 625 934 A1

FIG. 14d

EP 4 625 934 A1

Computing Environment 1500

Control Unit
1502

ALU
1504

Process Unit
1506

Networking Devices
1508

I/O Devices
1510

Memory
1512

Storage
1514

FIG. 15

Europäisches
Patentamt

European
Patent Office

Office européen
des brevets

# EUROPEAN SEARCH REPORT

Application Number

EP 24 17 9301

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2008/144515 A1 (OUELLETTE MICHEL [CA] ET AL) 19 June 2008 (2008-06-19)<br>* abstract *<br>* paragraph [0002] - paragraph [0004] *<br>* paragraph [0018] - paragraph [0032] *<br>----- | 1-13 | INV.<br>H04L45/02<br>H04L41/14<br>H04L45/302<br>H04L45/64<br>H04L47/70 |
| Y | CN 105 187 150 A (NANJING WUBEN INFORMATION SCIENCE & TECHNOLOGY CO LTD) 23 December 2015 (2015-12-23)<br>* abstract *<br>* paragraph [0019] - paragraph [0020] *<br>* paragraph [0030] - paragraph [0031] *<br>----- | 1-13 | |
| Y | CN 116 169 667 A (SHENZHEN POWER SUPPLY BUREAU) 26 May 2023 (2023-05-26)<br>* abstract *<br>* paragraph [0008] - paragraph [0022] *<br>* paragraph [0035] - paragraph [0046] *<br>----- | 1-13 | |
| A | US 2013/039220 A1 (RUFFINI STEFANO [IT] ET AL) 14 February 2013 (2013-02-14)<br>* paragraph [0011] *<br>* paragraph [0070] - paragraph [0074] *<br>* paragraph [0119] - paragraph [0123] *<br>* paragraph [0128] - paragraph [0162] *<br>* paragraph [0179] - paragraph [0189] *<br>* paragraph [0196] - paragraph [0198] *<br>----- | 1-13 | TECHNICAL FIELDS SEARCHED (IPC)<br><br>H04L |
| A | CN 113 629 743 A (GUANGDONG POWER GRID CO ET AL.) 9 November 2021 (2021-11-09)<br>* paragraph [0012] - paragraph [0017] *<br>* paragraph [0024] - paragraph [0032] *<br>* paragraph [0064] - paragraph [0068] *<br>* paragraph [0113] - paragraph [0123] *<br>* paragraph [0126] *<br>* paragraph [0152] *<br>----- | 1-13 | |

The present search report has been drawn up for all claims

| Place of search | Date of completion of the search | Examiner |
|---|---|---|
| The Hague | 21 October 2024 | Beker, Sergio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 17 9301

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2024

| Patent document cited in search report | | Publication date | Patent family member(s) | | Publication date |
|---|---|---|---|---|---|
| US 2008144515 A1 | | 19-06-2008 | US | 2008144515 A1 | 19-06-2008 |
| | | | US | 2012182863 A1 | 19-07-2012 |
| | | | US | 2014269434 A1 | 18-09-2014 |
| CN 105187150 A | | 23-12-2015 | NONE | | |
| CN 116169667 A | | 26-05-2023 | NONE | | |
| US 2013039220 A1 | | 14-02-2013 | EP | 2514125 A1 | 24-10-2012 |
| | | | JP | 5480977 B2 | 23-04-2014 |
| | | | JP | 2013514688 A | 25-04-2013 |
| | | | US | 2013039220 A1 | 14-02-2013 |
| | | | WO | 2011072881 A1 | 23-06-2011 |
| CN 113629743 A | | 09-11-2021 | NONE | | |

EPO FORM P0459

For more details about this annex : see Official Journal of the European Patent Office, No. 12/82